Europäisches Patentamt

European Patent Office

Office européen des brevets

(11) Veröffentlichungsnummer: **0 017 049**

**A1**

(12) **EUROPÄISCHE PATENTANMELDUNG**

(21) Anmeldenummer: **80101326.9**

(22) Anmeldetag: **13.03.80**

(51) Int. Cl.³: **H 02 G 7/05**
**F 16 G 11/04**

(30) Priorität: **09.04.79 NO 791193**

(43) Veröffentlichungstag der Anmeldung:
**15.10.80 Patentblatt 80/21**

(84) Benannte Vertragsstaaten:
**AT BE CH DE FR GB IT NL SE**

(71) Anmelder: **Karl Pfisterer Elektrotechnische
Spezialartikel GmbH & Co. KG
Augsburger Strasse 375
D-7000 Stuttgart 60(DE)**

(72) Erfinder: **Schlotz, Heinz
Hofstrasse 9
D-7300 Esslingen(DE)**

(72) Erfinder: **Bergmiller, Erich
Schönbergstrasse 11
D-7302 Ostfildern-Kemnat(DE)**

(72) Erfinder: **Gernet, Martin
Bruckwiesenweg 10
D-7012 Fellbach(DE)**

(72) Erfinder: **Kübler, Karl
Kühäcker 4
D-7141 Freiberg/N.(DE)**

(74) Vertreter: **Bartels, Hans et al,
Bartels, Brandes, Held, Wolff Patentanwälte Lange
Strasse 51
D-7000 Stuttgart 1(DE)**

(54) Abspannklemme für isolierte Freileitungen.

(57) Eine Abspannklemme für isolierte Freileitungen mit einem Klemmenkörper (1), der ein C-artiges Querschnittsprofil mit zwei gegeneinander offenen Rinnen hat, von denen die eine Rinne in der die eine Flanke bildenden Längszone mit Vorsprüngen (8) versehen ist, die in Rinnenlängsrichtung im Abstand voneinander in die Rinne ragen, weist einen elektrisch isolierenden, zwischen die Rinnen eingreifenden Klemmkeil (11) auf, der nur längs seiner einen Flanke eine Rinne zur Aufnahme eines Leiters hat und seine andere Flanke mit einem einen Eingriff in die Rinne gestattenden und dort eine Anlage nur an der von den Vorsprüngen freien Längszone gebenden Querschnittsprofil versehen ist.

Fig.4.

23. März 1979
Reg.-Nr. 125 884
3322rrp

Firma Karl Pfisterer Elektrotechnische Spezialartikel GmbH
& Co KG., 7000 Stuttgart 60 (Baden-Württemberg)

Abspannklemme für isolierte Freileitungen

Die Erfindung betrifft eine Abspannklemme für isolierte
Freileitungen, welche die Merkmale des Oberbegriffs des Anspruches 1 aufweist.

Beim Abspannen von Leiterbündeln, die aus drei Einzelleitern
bestehen, mittels der bekannten Abspannklemmen, die zwei
Klemmen der eingangs genannten Art aufweisen, kommt es immer
wieder zum Abreißen des von einer der beiden Klemmen gehaltenen Einzelleiters, obwohl beide Klemmen gleich ausgebildet sind, die Bedingungen, unter denen das Festklemmen der
Leiter erfolgt, also für alle Leiter gleich sind.

Der Erfindung liegt die Aufgabe zugrunde, eine Abspannklemme für isolierte Freileitungen zu schaffen, die alle Anforderungen erfüllt, also auch Leiterbündel, die aus drei Einzelleitern bestehen, zuverlässig und ohne die Gefahr einer Überlastung oder gar eines Abrisses eines Leiters festzuhalten.

Diese Aufgabe kann mit Hilfe einer Klemme gelöst werden, welche die Merkmale des Anspruches 1 aufweist. Mit einer derartigen Abspannklemme kann auch ein Einzelleiter eines Mehrleiterbündels festgeklemmt werden, ohne daß die Gefahr einer Überlastung dieses Einzelleiters besteht. Kombiniert man nämlich zwei der erfindungsgemäßen Abspannklemmen, legt aber den erfindungsgemäß ausgebildeten Keil nur in denjenigen Klemmenkörper ein, der den Einzelleiter aufnimmt, während in den anderen Klemmenkörper, welcher zwei Leiter abzuspannen hat, ein Keil eingesetzt wird, der längs beider Flanken je eine Rinne aufweist, dann werden nur bei der die beiden Leiter erfassenden Klemme die Vorsprünge wirksam, welche in die eine Rinne ragen. Nur bei der letztgenannten Klemme wird nämlich der Isolierkörper von einem der beiden Leiter gegen die Vorsprünge gedrückt, welche in die eine Rinne des Klemmenkörpers ragen. Bei der den Einzelleiter enthaltenden Klemme verhindert hingegen die Form des Klemmkeiles, daß die Klemmkraft zu einem Druck auf den Isolierkörper im Bereich der Vorsprünge führt. Da sich beim Festziehen der Klemmen der oder die Leiter zusammen mit dem Isolierkörper und dem Klemmkeil als eine Einheit relativ zum metallischen Klemmenkörper bewegen, wird je nach der Wirksamkeit der Vorsprünge der Verschiebeweg, den diese Einheit relativ zum metallischen Körper bis zum Festsitzen ausführen kann, mehr oder weniger stark verkürzt. Im Gegensatz zu den bekannten Abspannklemmen, bei denen der einzelne Leiter schon nach einer geringeren Verschiebung der aus Leiter, Isolierkörper und Klemmkeil bestehenden Einheit relativ zum metallischen Klemmenkörper festgeklemmt ist als ein Zweierbündel, ist bei der erfindungsgemäßen Klemme wegen der nur bei der Klemme für das Zweierbündel wirksamen Vorsprünge der Verschiebeweg in beiden Fällen zumindest annähernd gleich groß.

0017049

Besonders vorteilhaft ist bei der erfindungsgemäßen Klemme, daß für den Einzelleiter und für das Zweierbündel nur unterschiedliche Klemmkeile benötigt werden, die Klemmenkörper und Isolierkörper aber gleich ausgebildet sind, da hierdurch Abspannklemmen für Bündel mit mehr als zwei Leitern aus den Klemmen für zwei Leiter zusammengesetzt werden können. Ein derartiges Baukastensystem vermindert die Fertigungs- und Lagerhaltungskosten erheblich und vereinfacht auch die Montage.

Die Kombination von zwei Klemmenkörpern ist in verschiedener Weise möglich. Beispielsweise kann man die beiden metallischen Klemmenkörper an einen U-artigen Abspannbügel anhängen, dessen Schenkelenden als Haken oder Ösen ausgebildet sind. Die beiden Klemmenkörper liegen dann im Abstand voneinander. Man kann aber auch die beiden Klemmenkörper mit der Außenseite ihrer Mittelzone aneinander anlegen und gegebenenfalls in dieser Lage fest miteinander verbinden.

Auch die Ausbildung der in die eine Rinne ragenden Vorsprünge kann verschieden sein, da es nur darauf ankommt, die Verschiebung des Isolierkörpers im metallischen Klemmenkörper zu bremsen. Bei einer wegen ihrer einfachen Fertigung bevorzugten Ausführungsform sind die Vorsprünge sich in Umfangsrichtung der Rinne erstreckende Sicken oder Rippen.

Als vorteilhaft hat sich eine Anordnung der Vorsprünge im Bereich der sich an die Mittelzone anschließenden Flanke erwiesen.

In besonders einfacher Weise können die Vorsprünge mit einem Keil unwirksam gemacht werden, der mit einer einseitig seine Dicke im Bereich der in die Rinne eingreifenden Flanke vermindernden Abschrägung versehen ist. Um in möglichst einfacher Weise sicherzustellen, daß dieser Keil in der richtigen Lage in den Klemmenkörper eingesetzt wird, also so, daß die eine verminderte Dicke aufweisende Flanke in diejenige Rinne eingreift, in welche die Vorsprünge ragen, weist der Klemmkeil bei einer bevorzugten Ausführungsform auf seiner der Mittelzone des Klemmenkörpers abgekehrten Seite einen Vorsprung auf, dessen Höhe so groß ist, daß ein Einführen des Keils in den Klemmenkörper in einer Lage, in der der Vorsprung sich gegen die Mittelzone hin erstreckt, nicht möglich ist.

Bei Abspannklemmen für isolierte Freileitungen ist eine zuverlässige Isolierung gegenüber dem metallischen Klemmenkörper von großer Bedeutung. Bei der erfindungsgemäßen Abspannklemme steht deshalb der Isolierkörper nicht nur über den metallischen Klemmenkörper in dessen Längsrichtung über, sondern auch über die freien Ränder der beiden Rinnen. Aus demselben Grunde hat ferner vorzugsweise der zungenartige Abschnitt des Isolierkörpers hochgestellte, die Verbindungslasche übergreifende Seitenränder

Im folgenden ist die Erfindung anhand eines in der Zeichnung dargestellten Ausführungsbeispiels im einzelnen erläutert. Es zeigen:

Fig. 1   eine Seitenansicht einer Abspannklemme für ein Dreileiterbündel,

Fig. 2   eine Draufsicht auf den der Abspannung eines einzigen Leiters dienenden Teil,

Fig. 3   eine Draufsicht auf den der Abspannung von zwei Leitern dienenden Teil,

Fig. 4   einen Schnitt nach der Linie IV - IV der Fig. 2,

Fig. 5 einen Schnitt entsprechend Fig. 4 durch die
beiden metallischen Klemmenkörper.

Eine Abspannklemme zum Abspannen eines Bündels aus drei isolierten Freileitungen ist aus zwei Einzelklemmen zusammengesetzt, deren metallischer Klemmenkörper 1 gleich ausgebildet ist. Wie die Fig. 4 und 5 zeigen, hat der Klemmenkörper 1 ein C-artiges Querschnittsprofil mit zwei gegeneinander offenen Rinnen 2 und 3, deren Abstand voneinander in Rinnenlängsrichtung stetig zu demjenigen Ende hin zunimmt, an das sich eine eine Verlängerung der zwischen den Rinnen 2 und 3 liegenden, ebenen Mittelzone bildende Verbindungslasche 5 anschließt. Die Mittelzone 4, mit der die Rinnen 2 und 3 sowie die Verbindungslasche 5 einstückig ausgebildet sind, ist daher trapezförmig. Zur Versteifung der Mittelzone 4 ist diese mit Sicken 6 versehen, welche sich von der einen zur anderen Rinne erstrecken, in Längsrichtung der Rinnen im Abstand voneinander liegen und über die Außenseite der Mittelzone 4 überstehen.

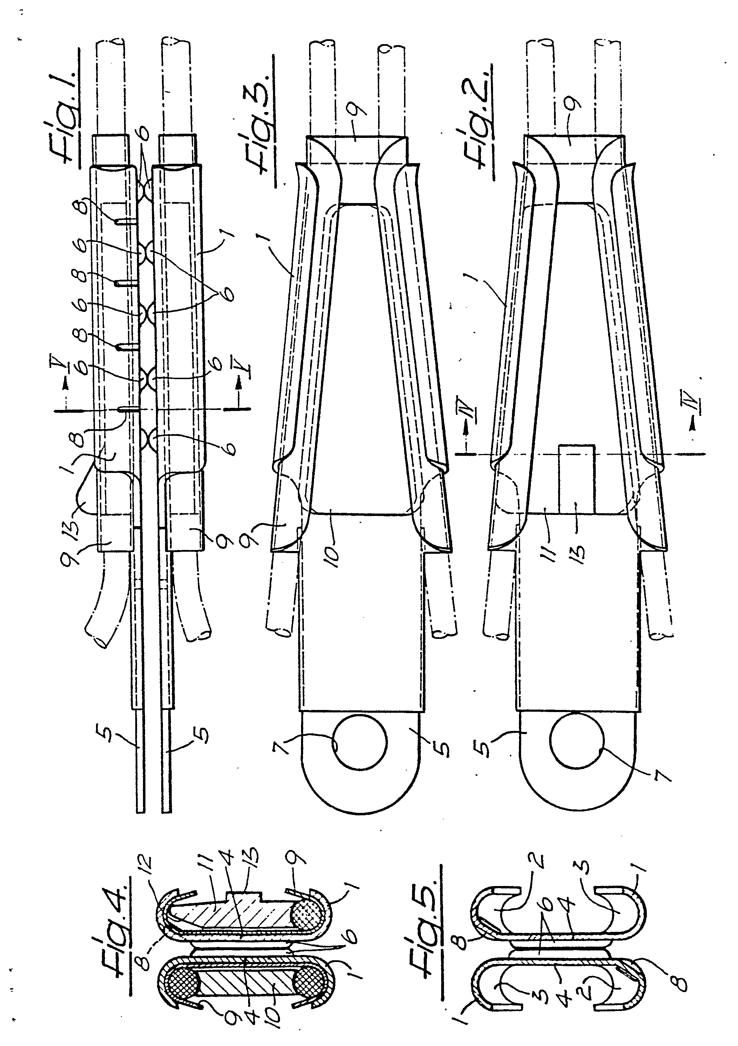

Wie die Fig. 1 und 5 zeigen, liegen die beiden gleich ausgebildeten Klemmenkörper 1 mit diesen Sicken 6 aneinander an. Eine feste Verbindung der beiden Klemmenkörper 1, beispielsweise durch Punktverschweißung im Bereich der Sicken 6, ist möglich, aber nicht notwendig. Im Ausführungsbeispiel ist die in den Fig. 1 und 4 dargestellte Lage der beiden Klemmenkörper 1 dadurch festgelegt, daß ein gemeinsames Abspannelement, beispielsweise ein Bolzen, vorgesehen ist, der einen kreisförmigen Durchbruch 7 im freien Endabschnitt der Verbindungslasche 5 durchdringt. In die beiden aufeinander ausgerichteten Durchbrüche 7 könnte aber selbstverständlich auch ein anders ausgebildetes Abspannelement eingreifen.

Eine der beiden Rinnen, im Ausführungsbeispiel die Rinne 2 beider Klemmenkörper 1, ist im Bereich ihrer an die Mittelzone 4 anschließenden Flanke mit sickenförmigen Vorsprüngen 8 versehen, welche, wie insbesondere Fig. 5 zeigt, in die Rinne 2 ragen und Querschneiden oder Querrippen bilden, die in Längsrichtung der Rinne 2 im Abstand voneinander vorgesehen sind.

Die andere Flanke der Rinne 2 sowie die Rinne 3 ist frei von solchen Vorsprüngen 8. Wegen der gleichen Ausbildung beider Klemmenkörper 1 ragen bei einer Blickrichtung gemäß den Fig.4 und 5 die sickenförmigen Vorsprünge 8 beim einen Klemmenkörper in die obere, beim anderen in die untere Rinne.

Die Rinnen 2 und 3 sind durch einen Isolierkörper 9 ausgekleidet, der wie der Klemmenkörper 1 ein C-artiges Querschnittsprofil hat und mit seiner Mittelzone an der Mittelzone 4 des Klemmenkörpers anliegt und diese abdeckt. Wie die Fig.1, 2 und 3 zeigen, steht der Isolierkörper 9 sowohl über die beiden Enden der Rinnen 2 und 3 als auch über ihren freien Rand ein Stück weit über. An die Mittelzone des Isolierkörpers 9, dessen Wandstärke kleiner ist als diejenige des metallischen Klemmenkörpers 1, schließt sich ein laschenförmiger Abschnitt an, der die Verbindungslasche 5 bis nahe zum Durchbruch 7 auf der der Innenseite der Mittelzone 4 entsprechenden Seite und mittels hochgestellter Ränder auch auf den beiden Schmalseiten vollständig abdeckt. Die Innenfläche der vom Isolierkörper 9 gebildeten beiden Rinnen kann mit einer Querriffelung od.dgl. versehen sein, um sicherzustellen, daß beim Festziehen der Abspannklemme der in dieser Rinne liegende Leiter sich nicht relativ zum Isolierkörper 9 verschiebt, sondern diesen bei einer Bewegung relativ zum metallischen Klemmenkörper 1 mitnimmt.

Wie Fig. 4 zeigt, sind den beiden Klemmenkörpern 1 Klemmkeile 10 und 11 unterschiedlicher Form zugeordnet. Zwar bestehen beide Klemmkeile 10 und 11 aus elektrisch isolierendem Material, und außerdem ist der Keilwinkel, den die beiden Flanken bilden, bei beiden Keilen gleich dem Winkel, unter dem sich die beiden Rinnen 2 und 3 nähern. Der Klemmkeil 10, der zum Abspannen von zwei Leitern bestimmt ist, weist jedoch in jeder seiner beiden Flanken eine in Keillängsrichtung verlaufende Rinne auf, wohingegen der Klemmkeil 11, der für die Abspannung eines einzelnen Leiters bestimmt ist, mit einer solchen Rinne nur auf seiner einen Flanke versehen ist. Im Bereich seiner anderen Flanke weist der Keil 11 eine Abschrägung 12 auf, durch welche seine Dicke einseitig zu der abgerundeten Flanke abnimmt, wie Fig. 4 deutlich zeigt. Durch diese Abschrägung 12 wird erreicht, daß sich der Keil 11 in der Rinne 2 nicht im Bereich von deren die sickenförmigen Vorsprünge 8 tragenden Flanke abstützt, sondern nur im Bereich der anderen Flanke. Dadurch wird vermieden, daß der Isolierkörper 9 vom Keil 11 gegen die sickenförmigen Vorsprünge 8 gedrückt wird. Hingegen wird in demjenigen Klemmenkörper, mit dem zwei Leiter abgespannt werden, der Isolierkörper 9 vom einen Leiter gegen die sickenförmigen Vorsprünge 8 gedrückt und daher werden nur hier, nicht aber bei der den Einzelleiter festhaltenden Klemme,die Vorsprünge 8 wirksam.

Damit sichergestellt ist, daß der Klemmkeil 11 nur in der in Fig. 4 dargestellten Lage in den Klemmenkörper und den Isolierkörper eingeführt werden kann, in welcher der Isolierkörper nicht gegen die sickenartigen Vorsprünge 8 gedrückt wird, ist er auf der der Mittelzone 4 abgekehrten Seite mit einer Nase 13 versehen, deren Höhe so groß ist, daß ein Einlegen des Keiles in einer Lage, in der die Nase 13 gegen die Mittelzone 4 weist, nicht möglich ist. Die Nase 13 kann außerdem dazu dienen, den Klemmkeil 11 mittels Hammerschlägen in den Klemmenkörper 1 einzutreiben.

Damit dann, wenn nach der Montage der Abspannklemme die Leiter einer Zugbelastung ausgesetzt werden, der oder die Leiter zusammen mit dem Isolierkörper 9 und dem Klemmkeil 10 oder 11 eine Einheit bilden, die sich als Ganzes unter der Zugbelastung relativ zum Klemmenkörper 1 verschiebt, sind die Rinnen in den Flanken der Klemmkeile 10 und 11 mit einer Querriffelung od.dgl. versehen.

Die Form und Größe der sickenartigen Vorsprünge 8 ist so gewählt, daß der Verschiebeweg, den die aus den Leitern, dem Isolierkörper und dem Klemmkeil 10 bestehende Einheit unter der Zugbelastung erfährt, auf denjenigen Betrag verkürzt wird, um den sich der einzelne Leiter zusammen mit dem Klemmkeil 11 und dem Isolierkörper 9 im anderen Klemmenkörper relativ zu diesem unter der Zugbelastung verschiebt, wodurch sichergestellt ist, daß alle Leiter einer gleichen Zugbelastung ausgesetzt sind.

5 Der weite Überstand des Isolierkörpers 9 über den Klemmenkörper 1 und die Abdeckung von dessen Verbindungslasche 5 bis zum Durchbruch 7 gewährleisten eine gute Isolation auch unter ungünstigen Bedingungen.

Patentansprüche

1.     Abspannklemme für isolierte Freileitungen mit einem metallischen Klemmenkörper, der ein C-artiges Querschnittsprofil mit zwei gegeneinander offenen Rinnen aufweist, deren Abstand voneinander in Rinnenlängsrichtung stetig zu demjenigen Ende des Klemmenkörpers hin zunimmt, an das sich eine eine Verlängerung der zwischen den Rinnen liegenden Mittelzone bildende Verbindungslasche anschließt,

einem in den Klemmenkörper einzulegenden Isolierkörper, der einen im Querschnitt C-artigen Abschnitt, welcher die Rinnen auskleidet und die Mittelzone abdeckt sowie über die Rinnen in deren Längsrichtung an dem mit der Verbindungslasche versehenen Ende des Klemmenkörpers übersteht, und einen sich an den C-artigen Abschnitt anschließenden, die Verbindungslasche auf einem Teil ihrer Länge abdeckenden, zungenartigen Abschnitt aufweist,

und einem elektrisch isolierenden, zwischen die Rinnen des Isolierkörpers eingreifenden Klemmkeil, der hinsichtlich seines Keilwinkels an den Verlauf der Rinnen angepaßt ist, dadurch gekennzeichnet, daß

eine der beiden Rinnen (2,3) in der die eine Flanke bildenden Längszone Vorsprünge (8) aufweist, die in Rinnenlängsrichtung im Abstand voneinander in die Rinne (2) ragen und

der Klemmkeil (11) nur längs seiner einen Flanke eine Rinne zur Aufnahme eines Leiters hat und seine andere Flanke mit einem einen Eingriff in die Rinne (2) gestattenden und dort eine Anlage nur an der von den Vorsprüngen (8) freien Längszone gebenden Querschnittsprofil versehen ist.

2.     Abspannklemme nach Anspruch 1, dadurch gekennzeichnet, daß die Vorsprünge sich in Umfangsrichtung der Rinne (2) erstreckende Sicken (8) sind.

3. Abspannklemme nach Anspruch 1 oder 2, dadurch gekennzeichnet, daß die Vorsprünge (8) im Bereich der sich an die Mittelzone (4) anschließenden Flanke angeordnet sind.

4. Abspannklemme nach einem der Ansprüche 1 bis 3, dadurch gekennzeichnet, daß der Klemmkeil (11) mit einer einseitigen, seine Dicke im Bereich der in die Rinne eingreifenden Flanke vermindernden Abschrägung (12) versehen ist.

5. Abspannklemme nach Anspruch 4, dadurch gekennzeichnet, daß der Klemmkeil (11) auf seiner der Mittelzone (4) des Klemmenkörpers (1) abgekehrten Seite einen Vorsprung (13) aufweist, dessen Höhe so groß ist, daß ein Einführen des Keils in den Klemmenkörper in einer Lage, in der der Vorsprung sich gegen die Mittelzone hin erstreckt, nicht möglich ist.

6. Abspannklemme nach einem der Ansprüche 1 bis 5, dadurch gekennzeichnet, daß der Klemmenkörper (1) auf der Außenseite seiner Mittelzone (4) eine Anlagefläche für einen gleich ausgebildeten Klemmenkörper (1) hat.

7. Abspannklemme nach einem der Ansprüche 1 bis 6, dadurch gekennzeichnet, daß der Isolierkörper (9) über den freien Rand beider Rinnen (2,3) und über das der Verbindungslasche (5) abgekehrte Ende des Klemmenkörpers (1) übersteht.

8. Abspannklemme nach einem der Ansprüche 1 bis 7, dadurch gekennzeichnet, daß der zungenartige Abschnitt des Isolierkörpers (9) hochgestellte, die Verbindungslasche (5) übergreifende Seitenränder hat.

- . -

0017049

**Fig. 1.**

**Fig. 3.**

**Fig. 2.**

**Fig. 4.**

**Fig. 5.**

| | Europäisches Patentamt | **EUROPÄISCHER RECHERCHENBERICHT** | Nummer der Anmeldung<br>EP 80 10 1326 |

## EINSCHLÄGIGE DOKUMENTE

| Kategorie | Kennzeichnung des Dokuments mit Angabe, soweit erforderlich, der maßgeblichen Teile | betrifft Anspruch | KLASSIFIKATION DER ANMELDUNG (Int.Cl. 3) |
|---|---|---|---|
| | FR - A - 2 152 887 (ERICSSON)<br>* Seite 1, Zeilen 1-5; Seite 2, Zeilen 5-23 *<br><br>-- | 1,2 | H 02 G 7/05<br>F 16 G 11/04 |
| | FR - A - 590 310 (SLOPER)<br>* Seite 2, Zeilen 28-93; Seite 3, Zeilen 19-47; Figur 1 *<br><br>-- | 1,2 | |
| | FR - E - 94 844 (A.P.I.)<br>* Rechte Spalte; Absätze 1,2; Figur 4 *<br><br>-- | 1,6 | RECHERCHIERTE SACHGEBIETE (Int. Cl. 3)<br><br>H 02 G 7/05<br>7/20<br>F 16 G 11/04 |
| | FR - A - 2 146 262 (PFISTERER)<br>* Seite 3, Zeile 35 bis Seite 4, Zeile 7; Figuren 1-4 *<br><br>-- | 1 | |
| | DE - B - 1 020 076 (MAUEL)<br>* Spalte 4, Zeilen 24-54; Figur 3 *<br><br>---- | 5 | |

KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort<br>Den Haag | Abschlußdatum der Recherche<br>16-07-1980 | Prüfer<br>TIELEMANS |

EPA form 1503.1 06.78